(19) Europäisches Patentamt / European Patent Office / Office européen des brevets

(11) **EP 3 568 719 B1**

(12) **FASCICULE DE BREVET EUROPEEN**

(45) Date de publication et mention de la délivrance du brevet:
**13.04.2022 Bulletin 2022/15**

(21) Numéro de dépôt: **18702759.4**

(22) Date de dépôt: **11.01.2018**

(51) Classification Internationale des Brevets (IPC):
**G02B 1/00** *(2006.01)*

(52) Classification Coopérative des Brevets (CPC):
**G02B 1/002**

(86) Numéro de dépôt international:
**PCT/FR2018/050061**

(87) Numéro de publication internationale:
**WO 2018/130786 (19.07.2018 Gazette 2018/29)**

(54) **LENTILLE À MÉTASURFACE FOCALISANTE ET FAIBLE ABERRATION CHROMATIQUE**

LINSE MIT FOKUSSIERENDER META-OBERFLÄCHE UND GERINGER CHROMATISCHER ABERRATION

LENS WITH FOCUSING METASURFACE AND LOW CHROMATIC ABERRATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.01.2017 FR 1750289**

(43) Date de publication de la demande:
**20.11.2019 Bulletin 2019/47**

(73) Titulaire: **Commissariat à l'Energie Atomique et aux Energies Alternatives**
**75015 Paris (FR)**

(72) Inventeurs:
• **BADANO, Giacomo**
**38250 Lans En Vercors (FR)**
• **ROTHMAN, Johan**
**38000 Grenoble (FR)**

(74) Mandataire: **Brevalex**
**56, Boulevard de l'Embouchure**
**B.P. 27519**
**31075 Toulouse Cedex 2 (FR)**

(56) Documents cités:
• **BERNARDO S MENDOZA ET AL: "Tailored Optical Polarization in Nano-Structured Metamaterials", ARXIV.ORG, CORNELL UNIVERSITY LIBRARY, 201 OLIN LIBRARY CORNELL UNIVERSITY ITHACA, NY 14853, 4 avril 2016 (2016-04-04), XP080693043,**
• **CORTIE M B ET AL: "Plasmon resonance and electric field amplification of crossed gold nanorods", PHOTONICS AND NANOSTRUCTURES, ELSEVIER, AMSTERDAM, NL, vol. 7, no. 3, 1 novembre 2009 (2009-11-01), pages 143-152, XP026704330, ISSN: 1569-4410, DOI: 10.1016/J.PHOTONICS.2009.06.002 [extrait le 2009-06-21]**
• **IMHOF ET AL: "Strong birefringence in left-handed metallic metamaterials", OPTICS COMMUNICATIONS, ELSEVIER, AMSTERDAM, NL, vol. 280, no. 1, 13 octobre 2007 (2007-10-13), pages 213-216, XP022298030, ISSN: 0030-4018, DOI: 10.1016/J.OPTCOM.2007.07.033**
• **AL-NUAIMI MUSTAFA K TAHER ET AL: "Design of High-Directivity Compact-Size Conical Horn Lens Antenna", IEEE ANTENNAS AND WIRELESS PROPAGATION LETTERS, vol. 13, 6 janvier 2014 (2014-01-06), pages 467-470, XP011543465, ISSN: 1536-1225, DOI: 10.1109/LAWP.2013.2297519 [extrait le 2014-03-19]**

• **LIN L ET AL: "Resonant nanometric cross-shaped apertures: Single apertures versus periodic arrays", APPLIED PHYSICS LETTERS, A I P PUBLISHING LLC, US, vol. 95, no. 20, 20 novembre 2009 (2009-11-20), pages 201116-201116, XP012126482, ISSN: 0003-6951, DOI: 10.1063/1.3267080**

## Description

### DOMAINE TECHNIQUE

L'objet de la présente invention concerne des lentilles planes à métasurface, en particulier à métasurface focalisante. La présente invention peut notamment s'appliquer au triage spectral.

### ÉTAT DE LA TECHNIQUE ANTÉRIEURE

Les lentilles optiques conventionnelles utilisent les propriétés de réfraction des matériaux qui les composent pour modifier les fronts d'onde et contrôler les chemins optiques des faisceaux qui les traversent.

Ces lentilles optiques sont généralement épaisses notamment pour de courtes distances focales. Pour obtenir des épaisseurs plus faibles, il est bien connu de recourir à des lentilles de Fresnel. En pratique, on réalise les lentilles de Fresnel par des nombreux niveaux de lithographie de manière à discrétiser la variation d'épaisseur de diélectrique nécessaire pour obtenir la forme désirée de front d'onde en sortie. En outre, les lentilles de Fresnel ne présentent pas de sélectivité spectrale.

Les lentilles à métasurfaces permettent de réaliser une variation de phase continue avec une bonne sélectivité spectrale tout en présentant une faible épaisseur. Ces lentilles à métasurfaces utilisent généralement des réseaux de résonateurs optiques élémentaires (encore dénommés antennes optiques) avec une densité sensiblement inférieure à la longueur d'onde incidente d'intérêt. La forme, la taille et l'orientation de ces antennes optiques sont choisies pour obtenir la forme de front d'onde souhaitée.

De manière générale, on sait réaliser des lentilles plates à métasurface. On appelle métasurface une surface structurée pour créer un réseau de résonateurs dont les dimensions et le pas de réseau sont inférieurs à la longueur d'onde. Les résonateurs sub-longueur d'onde sont généralement obtenus par lithographie à partir d'une couche diélectrique ou métallique déposée sur un substrat. La phase et l'amplitude de l'onde lumineuse réémise par chaque résonateur sub-longueur d'onde élémentaire dépendent de sa géométrie, de son orientation par rapport à la polarisation de l'onde incidente et des matériaux qui le constituent. Cette onde peut être considérée comme une onde sphérique affectée d'un retard de phase par rapport à l'onde incidente.

On trouvera une introduction générale aux lentilles à métasurface dans l'article de N. Yu et al. intitulé « Flat optics with designer metasurfaces » publié dans Nature Materials, Vol. 13, Feb. 2014, pp. 139-150.

Un exemple de lentille à métasurface convergente a été proposé dans l'article de X. M. Goh et al. intitulé « Plasmonic lenses for wavefront control applications using two-dimensional nanometric cross-shaped aperture arrays » publié dans J. Opt. Soc. Am. B, Vol. 28, No. 3, Mars 2011, pp. 547-553. Cette lentille est formée par un réseau périodique de croix de taille variable (taille décroissante du centre vers la périphérie pour une lentille convergente et croissante du centre vers la périphérie pour une lentille divergente). Toutefois, si cette structure de lentille est simple, elle présente un inconvénient majeur dans la mesure où il n'est pas possible de contrôler de manière indépendante la phase et la loi de transmission en longueur d'onde (en particulier le coefficient de transmission en longueur d'onde). Il en résulte une apodisation de la pupille à une longueur d'onde déterminée. En outre, ce type de lentille possède une forte aberration chromatique. En d'autres termes, la distance focale de ce type de lentille varie sensiblement avec la longueur d'onde. Enfin, ce type de lentille présente une faible sélectivité spectrale.

L'objet de la présente invention est par conséquent de proposer des lentilles à métasurface ne présentant qu'une faible aberration chromatique dans une bande spectrale prédéterminée, tout en garantissant une distribution uniforme du coefficient de transmission pour une longueur d'onde donnée, ainsi qu'une meilleure sélectivité spectrale.

### EXPOSÉ DE L'INVENTION

La présente invention est définie par une lentille à métasurface selon la revendication 1. Des modes de réalisation additionnels sont définis dans les revendications dépendantes.

La longueur du bras long est typiquement supérieure de 5% à 10% à la longueur du bras court.

Avantageusement, les longueurs des bras long et court sont choisies de manière à ce que l'écart entre la fréquence de résonance du bras long et la fréquence de résonance du bras court soit inférieur à la largeur à mi-hauteur de la réponse spectrale en transmission de chacun desdits bras.

De préférence, les croix sont réalisées par des évidements au sein d'une couche métallique, la couche métallique étant déposée sur une première couche diélectrique transparente à ladite longueur d'onde donnée.

En outre, ces évidements peuvent être comblés par un matériau d'indice optique plus élevé que l'indice optique de la première couche diélectrique.

La première couche diélectrique peut être elle-même déposée sur un substrat semi-conducteur transparent à ladite longueur d'onde donnée, l'indice optique du substrat étant supérieur à l'indice de la première couche diélectrique.

En outre, une seconde couche diélectrique peut être déposée sur la couche métallique, ladite seconde couche diélectrique étant réalisée dans le même matériau que la première couche diélectrique et étant d'épaisseur $\frac{\lambda}{2n}$ où $\lambda$ est ladite longueur d'onde $2n$ donnée et $n$ est l'indice des première et seconde couches diélectriques.

Selon un premier mode de réalisation, la lentille à métasurface est une lentille convergente, de distance focale $f$ et l'orientation d'une croix dont le centre est situé en un point $P_i$ de coordonnées $(x_i, y_i)$ dans un repère $(O, x, y)$ dans le plan de la lentille est choisie de manière à générer un déphasage propre $\varphi_i = \frac{2\pi n_o}{\lambda}\left(f - \sqrt{x_i^2 + y_i^2 + f^2}\right)$ avec $|\varphi_i| < \frac{\pi}{2}$ où $\lambda$ est ladite longueur d'onde donnée et $n_o$ est l'indice du milieu de sortie de la lentille.

Selon un second mode de réalisation, la lentille à métasurface est une lentille convergente, de distance focale $f$ et l'orientation d'une croix dont le centre est situé en un point $P_i$ de coordonnées $(x_i, y_i)$ dans un repère $(O, x, y)$ dans le plan de la lentille est choisie de manière à générer un déphasage propre $\varphi_i = \phi_i \bmod \frac{\pi}{2}$ avec $\phi_i = \frac{2\pi n_o}{\lambda}\left(f - \sqrt{x_i^2 + y_i^2 + f^2}\right)$, où $n_o$ est l'indice du milieu de sortie de la lentille, une troisième couche diélectrique d'épaisseur $\frac{\lambda}{2n}$ étant déposée uniquement au-dessus des croix pour lesquelles $\frac{\pi}{2} < |\phi|_i < \pi$.

Selon une variante, l'orientation des croix ne peut prendre qu'un ensemble fini de valeurs angulaires discrètes.

Le premier réseau peut être choisi périodique.

Selon une variante du premier mode de réalisation, la lentille à métasurface comprend un second réseau de résonateurs situé dans le plan de la lentille, les résonateurs du second réseau étant des croix de formes identiques, chaque croix du second réseau étant en outre située dans une section efficace de taille $\left(\frac{\lambda}{2}\right)^2$ d'une croix du premier réseau, les croix du second réseau étant de taille inférieure à celle des croix du premier réseau, chaque croix du second réseau comportant également un bras long et un bras court, chaque croix du second réseau déphasant l'onde incidente par un déphasage propre dépendant de son orientation, au sein du second plan de la lentille, par rapport à ladite direction de référence.

Selon un exemple d'application, l'onde incidente comprend une première composante spectrale à une première longueur d'onde $\lambda_1$ et une seconde composante spectrale à une seconde longueur d'onde $\lambda_2$. La lentille à métasurface peut être une lentille convergente, de distance focale $f$, l'orientation d'une croix du premier réseau dont le centre est situé en un point $P_i$ de coordonnées $(x_i, y_i)$ dans un repère $(O, x, y)$ du plan de la lentille étant choisie de manière à générer un déphasage propre $\varphi_{1,i} = \frac{2\pi n_o^1}{\lambda_1}\left(f - \sqrt{(x_i - x_1)^2 + (y_i - y_1)^2 + f^2}\right)$ avec $|\varphi_{1,i}| < \frac{\pi}{2}$ où $n_o^1$ est l'indice optique du milieu de sortie de la lentille, à la longueur d'onde $\lambda_1$, et l'orientation d'une croix du second réseau dont le centre est situé en un point $P_j$ de coordonnées $(x_j, y_j)$ dans le repère $(O, x, y)$ étant choisie de manière à générer un déphasage propre $\varphi_{2,j} = \frac{2\pi n_o^2}{\lambda_2}\left(f - \sqrt{(x_j - x_2)^2 + (y_j - y_2)^2 + f^2}\right)$ avec $|\varphi_{2,j}| < \frac{\pi}{2}$ où $n_o^2$ est l'indice optique du milieu de sortie de la lentille, à la longueur d'onde $\lambda_2$.

**BRÈVE DESCRIPTION DES DESSINS**

D'autres caractéristiques et avantages de l'invention apparaîtront à la lecture d'un mode de réalisation préférentiel de l'invention, en faisant référence aux figures jointes parmi lesquelles :

La Fig. 1 représente de manière schématique la géométrie d'un résonateur sub-longueur d'onde utilisé dans une lentille à métasurface selon l'invention ;

La Fig. 2A représente de manière schématique la structure d'une lentille à métasurface selon un premier mode de réalisation de l'invention ;

La Fig. 2B représente de manière schématique la structure d'une lentille à métasurface selon un second mode de réalisation de l'invention ;

Les Figs. 3A-3C représentent de manière schématique, respectivement un premier, un second et un troisième exemple de lentille à métasurface selon l'invention ;

La Fig. 4 représente de manière schématique un exemple de surface diélectrique structurée utilisée dans le second mode de réalisation de l'invention ;

La Fig. 5 représente la variation relative de la distance focale en fonction d'une variation relative de la longueur d'onde incidente, pour un exemple de lentille à métasurface selon l'invention ;

La Fig. 6 représente de manière schématique un agencement de résonateurs sub-longueur d'onde pour une lentille à métasurface selon une variante de réalisation de l'invention ;

La Fig. 7 représente de manière schématique l'utilisation d'une lentille à métasurface pour effectuer un tri spectral ;

La Fig. 8 représente de manière schématique l'utilisation de lentilles à métasurface pour effectuer une imagerie quadrichromique.

La Fig. 9 représente le pourcentage de photons tombant sur une portion du plan focal en fonction de la longueur d'onde pour une des lentilles à métasurface de la Fig. 8.

## EXPOSÉ DÉTAILLÉ DE MODES DE RÉALISATION PARTICULIERS

L'idée à la base de la présente invention est de réaliser une lentille à métasurface à partir d'un réseau bidimensionnel de résonateurs, les résonateurs étant des croix de formes identiques, comprenant deux bras orthogonaux de longueurs inégales, chaque croix introduisant un déphasage qui lui est propre en fonction de son orientation par rapport à une direction de référence. Le fait d'utiliser des croix de formes identiques mais d'orientation variable permet d'ajuster localement le déphasage appliqué à l'onde incidente tout en garantissant une distribution sensiblement uniforme du coefficient de transmission dans le plan de la lentille. Les orientations des différentes croix sont choisies de manière à obtenir la forme de front d'onde souhaitée, étant entendu que l'objet de l'invention étant une lentille, l'ensemble des croix ne présente pas une orientation unique (autrement dit au moins deux croix dudit ensemble présentent des orientations différentes). Enfin, le fait d'utiliser des croix à bras de longueurs inégales avec un écart relatif relativement faible (de 5 à 15%), comme nous le verrons plus loin, permet de réduire les aberrations chromatiques dans la bande spectrale d'intérêt.

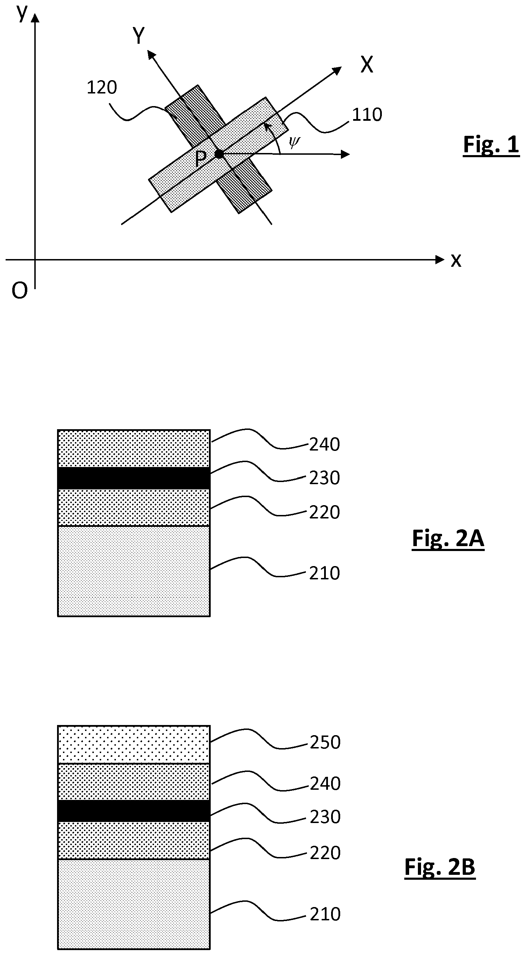

La Fig. 1 représente de manière schématique la géométrie d'un résonateur sub-longueur d'onde en forme de croix à longueurs de bras inégales, tel qu'utilisé dans une lentille à métasurface selon la présente invention.

Le résonateur sub-longueur d'onde illustré en Fig. 1 constitue le motif élémentaire du réseau utilisé dans la lentille à métasurface. Ce résonateur comprend un premier bras, dit bras long, 110, s'étendant selon une première direction OX et un second bras, dit bras court, 120, s'étendant selon une seconde direction OY, sensiblement orthogonale à la première direction. Les bras court et long se coupent en leurs milieux respectifs. L'écart relatif de longueur entre les bras long et court est avantageusement compris entre 5% et 15%, de préférence entre 5% et 10%.

On désignera conventionnellement par orientation de la croix (dans le plan Oxy), l'angle $\psi$ que fait le bras long, c'est-à-dire l'axe OX, avec une direction de référence, par exemple l'axe Ox. On comprendra que, compte-tenu de sa symétrie axiale, l'orientation de la croix est comprise dans une plage angulaire de largeur $\pi$.

La Fig. 2A représente de manière schématique la structure, vue en coupe, d'une lentille à métasurface selon un premier mode de réalisation de l'invention.

La lentille à métasurface est réalisée à partir d'un substrat 210, par exemple un substrat en matériau semiconducteur tel que Si, CdHgTe, GaAs, GaAlAs, etc., transparent pour la longueur d'onde d'intérêt. L'indice optique du matériau (à cette longueur d'onde) est choisi élevé, par exemple égal à 3,5. Le substrat représente la pupille de sortie de la lentille.

Le substrat, 210, est recouvert par une première couche de diélectrique de bas indice, 220, c'est-à-dire d'indice optique sensiblement plus faible que celui du substrat. De manière générale, l'épaisseur de la première couche diélectrique est choisie égale à $\dfrac{\lambda}{2n}$ où n est l'indice optique du matériau de la première couche diélectrique.

L'épaisseur de la première couche diélectrique est par exemple de 100 à 200 nm. On pourra utiliser du $SiO_2$ dans la gamme de longueur d'onde 2-9 $\mu$m et du ZnS au-delà. En deçà de 2 $\mu$m, on pourra utiliser du $SiO_x$ en choisissant sa stœchiométrie, ou bien un autre oxyde tel que l'ITO par exemple.

Les résonateurs sub-longeur d'onde sont réalisés au moyen d'une couche métallique, 230, déposée sur la première couche diélectrique. La couche métallique est épaisse de 50 à 300nm et constituée d'un métal de très bonne conductivité, tel que Cu, Au, Al ou Ag. L'épaisseur de la couche est déterminée en fonction de la sélectivité spectrale souhaitée de la lentille, une couche épaisse conduisant à une résonance étroite et donc une bande passante étroite, une couche mince conduisant à une résonance moins marquée et donc à une bande passante plus large.

Cette couche métallique est structurée comme expliqué ci-après.

Les résonateurs sont réalisés par des évidements dans la couche métallique, ces évidements ayant la forme de croix à bras inégaux, comme décrit en relation avec la Fig. 1. Les évidements peuvent ensuite être remplis d'un matériau diélectrique d'indice optique supérieur à celui de la première couche diélectrique. Par exemple, on pourra choisir un matériau diélectrique d'indice 2.2 pour une lentille destinée à opérer dans l'infrarouge moyen. Dans certaines applications, on pourra choisir un matériau d'indice plus élevé, par exemple du Si d'indice égal à 3.5. A l'inverse, lorsque la lentille est destinée à opérer dans le proche infrarouge, les évidements seront laissés vides, autrement dit, ils ne seront pas comblés par un matériau diélectrique.

Dans les exemples ci-dessus, la couche métallique peut être structurée par un procédé de gravure, par exemple une gravure faisceau d'ions focalisé ou FIB *(Focused Ion Beam)* ou bien par un procédé de dépôt à travers un masque. Dans la première variante, on pourra recourir à un procédé Damascène pour combler les évidements des croix au moyen d'un matériau diélectrique.

La couche métallique structurée 230 est avantageusement recouverte d'une seconde couche diélectrique, 240, de même indice n que la première couche diélectrique et d'épaisseur égale à $\dfrac{\lambda}{2n}$. Ainsi la couche métallique structurée est prise en sandwich entre deux couches diélectriques de même (bas) indice.

La Fig. 2B représente de manière schématique la structure d'une lentille à métasurface selon un second mode de réalisation de l'invention.

La structure de la lentille à métasurface selon le second mode de réalisation diffère de la structure du premier par la présence d'une troisième couche de diélectrique, 250, de même indice que les première et seconde couches de diélectrique. Cette troisième couche de diélectrique est structurée, à l'inverse des première et seconde couches de diélectrique.

Plus précisément, comme expliqué plus loin, cette couche d'épaisseur $\dfrac{\lambda}{2n}$ n'est présente qu'au-dessus de certains résonateurs seulement pour appliquer localement un déphasage supplémentaire de $\pi$ à l'onde incidente.

Les résonateurs sub-longueur d'onde sont arrangés dans le plan de la lentille à métasurface selon un réseau bidimensionnel. Ce réseau peut être un réseau périodique, par exemple un réseau rectangulaire, un réseau hexagonal voire un réseau circulaire. Le réseau peut être alternativement choisi pseudo-aléatoire. De préférence, on optera pour un réseau permettant de disposer le plus grand nombre de résonateurs sur la surface de la lentille, autrement dit d'obtenir le plus fort taux de remplissage de la pupille d'entrée (problème dit de close packing, bien connu de l'homme du métier). On appelle ici taux de remplissage le rapport :

$$\tau_{fill} = \frac{N\sigma}{S} \qquad (1)$$

où S est la surface de la pupille d'entrée, N est le nombre de résonateurs et $\sigma$ est la section efficace du résonateur élémentaire.

Le choix d'un fort taux de remplissage permet d'obtenir un coefficient de transmission élevé et une meilleure résolution spatiale du front d'onde.

Les orientations respectives des différents résonateurs sont choisies de manière à générer le front d'onde souhaité.

Plus précisément, selon un premier mode de réalisation, si l'on souhaite réaliser une lentille convergente de focale *f* et si l'on note $(x_i, y_i)$ les coordonnées du centre de phase d'un résonateur élémentaire (sub-longueur d'onde) i dans le plan de la lentille, son orientation $\psi_i$ est choisie de manière à créer un déphasage de :

$$\varphi_i = \frac{2\pi n_o}{\lambda}\left(f - \sqrt{x_i^2 + y_i^2 + f^2}\right) \qquad (2)$$

avec $|\varphi_i| < \dfrac{\pi}{2}$, où $\lambda$ est la longueur d'onde de l'onde incidente et $n_o$ est l'indice du milieu de sortie de la lentille, en l'occurrence, ici, l'indice du substrat. On notera que le résonateur sub-longueur d'onde ne peut appliquer qu'un déphasage limité à une plage de phase de largeur $\pi$. Autrement dit, les lentilles selon le premier mode de réalisation présentent une ouverture numérique relativement faible.

Selon un second mode de réalisation, pour réaliser une lentille de focale $f$, l'orientation de chaque résonateur élémentaire est choisie de manière à créer un déphasage :

$$\varphi_i = \phi_i \bmod \frac{\pi}{2} \qquad (3\text{-}1)$$

avec

$$\phi_i = \frac{2\pi n_o}{\lambda}\left( f - \sqrt{x_i^2 + y_i^2 + f^2} \right) \qquad (3\text{-}2)$$

Comme indiqué en relation avec la Fig. 2B, une troisième couche diélectrique d'épaisseur $\dfrac{\lambda}{2n}$ est déposée uniquement au-dessus des résonateurs pour lesquels $\dfrac{\pi}{2} < |\phi|_i < \pi$. Ce second mode de réalisation permet de couvrir la totalité de la plage de déphasage $[0,2\pi]$ et par conséquent d'obtenir une distance focale quelconque.

En pratique, pour simplifier la réalisation de la lentille à métasurface, on pourra n'autoriser qu'un ensemble fini d'orientations discrètes des résonateurs élémentaires.

Quel que soit le mode de réalisation, le coefficient de transmission (ou coefficient d'atténuation) de la lentille est distribué de manière sensiblement uniforme sur la pupille d'entrée. En effet, l'orientation d'un résonateur élémentaire, de par sa structure en croix, affecte peu le coefficient de transmission pour une lumière non polarisée. Ainsi, le phénomène d'apodisation observé dans les lentilles à métasurface de l'art antérieur est ici absent.

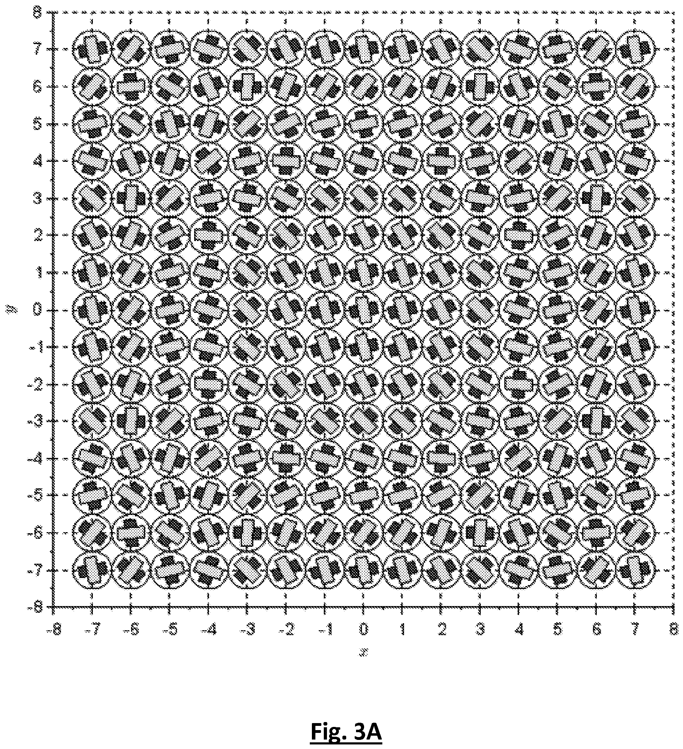

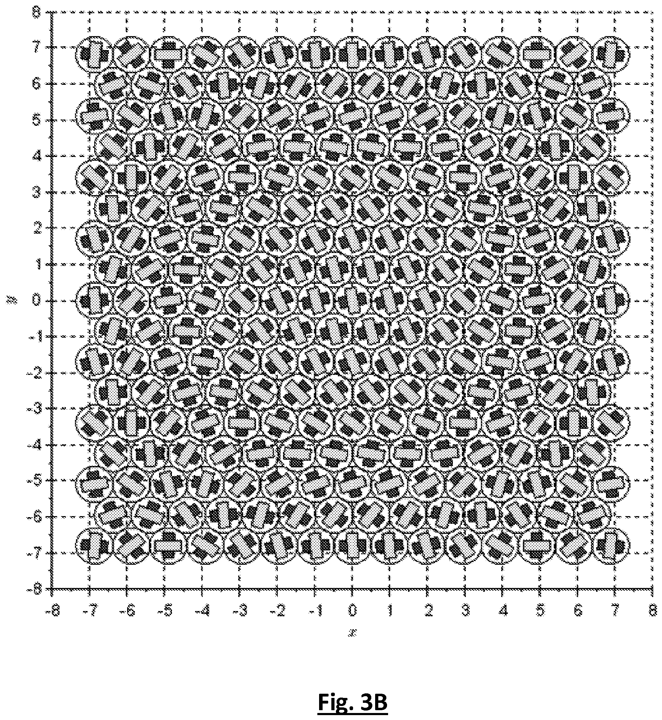

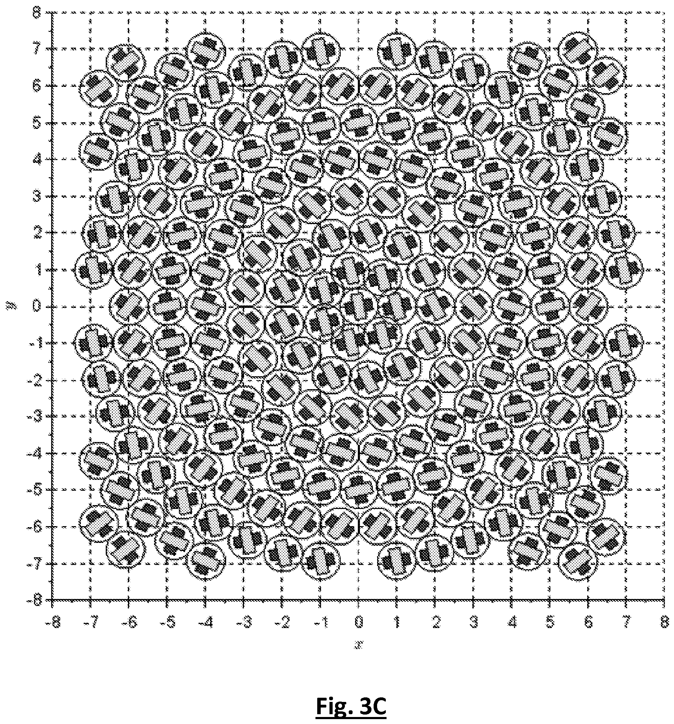

Les Figs. 3A, 3B et 3C représentent respectivement un premier, un deuxième et un troisième exemple de réalisation de lentille à métasurface selon l'invention.

Ces exemples de réalisation concernent une lentille à métasurface de section carrée. Les résonateurs élémentaires sub-longueur d'onde sont formés de croix à bras de longueurs inégales, comme décrit en relation avec la Fig. 1. Les sections efficaces de résonateurs élémentaires sont représentées par des cercles.

L'arrangement bidimensionnel des résonateurs dans la lentille de la Fig. 3A correspond à un réseau carré (les vecteurs générateurs du réseau sont des vecteurs directeurs des axes Ox et Oy). L'arrangement bidimensionnel de la Fig. 3B correspond à un réseau hexagonal (les vecteurs générateurs du réseau forment entre eux un angle de 30°). Enfin, celui de la Fig. 3C correspond à un réseau circulaire, les résonateurs étant arrangés selon des cercles concentriques. On notera qu'à section efficace $\sigma$ constante, le taux de remplissage le plus élevé est obtenu ici par un réseau hexagonal. On remarquera également que dans le troisième exemple, les résonateurs élémentaires situés à la même distance du centre de la lentille présentent tous la même orientation, ce qui est bien cohérent avec le fait qu'ils introduisent une même valeur de déphasage.

L'orientation des résonateurs élémentaires peut être obtenue au moyen d'une simulation.

Selon une première variante, dit variante semi-analytique, cette simulation a pour objet un résonateur élémentaire seul. Plus précisément, on fixe préalablement la forme géométrique du résonateur et notamment l'écart relatif des longueurs de ses bras et on détermine par simulation la loi de déphasage $\varphi = F(\psi)$ en fonction de l'orientation $\psi$ du résonateur par rapport à un axe de référence. Il est alors possible de calculer, à partir de la position $(x_i, y_i)$ d'un résonateur quelconque, le déphasage $\varphi_i$ à appliquer à partir des expressions (2) ou (3-1), (3-2) et d'en déduire l'orientation $\psi_i$ du résonateur.

En pratique, on note que deux résonateurs d'orientations distinctes $\psi_1, \psi_2$, $0 \le \psi_1, \psi_2 < \pi$ conduisent à un déphasage relatif $\varphi_1 - \varphi_2 = \psi_1 - \psi_2$. Il est donc aisé de générer une distribution de phase souhaitée à une constante près.

Selon une seconde variante, on effectue la simulation sur l'ensemble des résonateurs élémentaires de la lentille. Plus précisément, on choisit préalablement le type de réseau et la forme géométrique du résonateur élémentaire (en particulier l'écart relatif des longueurs de ses bras). On optimise ensuite de proche en proche l'orientation des différentes croix pour maximiser une fonction de mérite, par exemple l'intensité de l'onde diffractée au point focal souhaité ou la moyenne de l'intensité de l'onde diffractée dans la tache focale souhaitée.

Bien que les exemples donnés ci-dessus aient trait à des lentilles convergentes en un point focal, l'homme du métier comprendra qu'il est toujours possible à partir d'une distribution souhaitée de phase et d'amplitude dans le plan focal de déduire par transformée de Fourier inverse la distribution d'amplitude et de phase requise dans le plan de la lentille à métasurface. La distribution de phase peut être obtenue de manière discrétisée au moyen des déphasages appliqués par les résonateurs élémentaires. Il est ainsi possible d'obtenir une tache focale en anneau par exemple. Comme indiqué plus haut, l'objet de l'invention étant une lentille, la distribution de phase ne peut se réduire à un déphasage unique et donc les orientations des résonateurs élémentaires de la lentille ne se réduisent pas à une orientation unique.

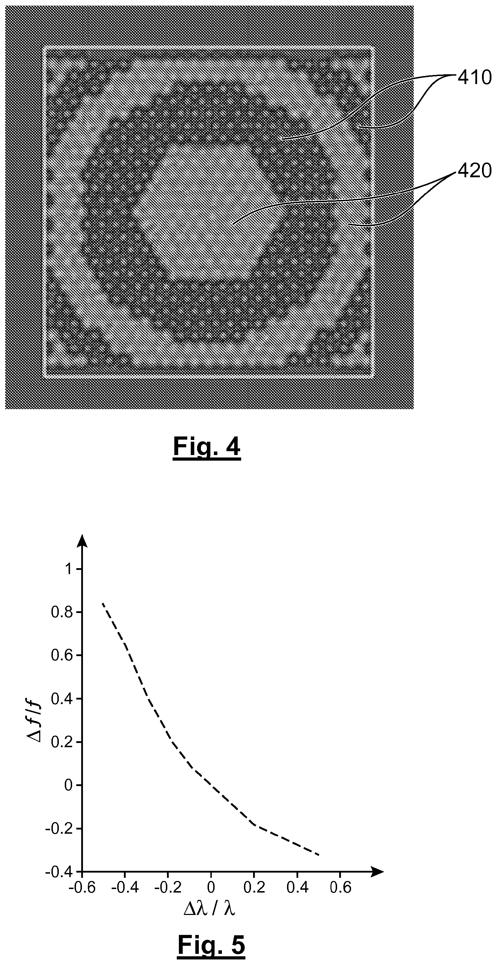

La Fig. 4 représente de manière schématique un exemple de surface diélectrique structurée pour une lentille à métasurface selon le second mode de réalisation de l'invention, utilisant un réseau circulaire de résonateurs élémentaires.

On a représenté en 410 la couche diélectrique structurée d'épaisseur $\frac{\lambda}{2n}$, la couche étant absente des zones 420. Comme indiqué plus haut, la couche diélectrique structurée permet d'introduire localement un déphasage supplémentaire de $\pi$ lorsque le déphasage $\phi_i$ à appliquer excède $\pi/2$ en valeur absolue.

Une caractéristique avantageuse des lentilles à métasurface selon l'invention est de ne présenter qu'une faible aberration chromatique. Ainsi, pour une lentille convergente, la distance focale dépend peu de la longueur d'onde dans la bande passante de la lentille. Pour ce faire, les longueurs des bras sont choisies différentes mais relativement proches de $\frac{\lambda}{2n_s}$ où $n_s$ est l'indice optique du matériau diélectrique au sein des croix (c'est-à-dire remplissant les bras des croix). Plus précisément, on rappelle que l'épaisseur de la couche métallique donne le facteur de qualité des résonateurs et donc la largeur de la bande passante de la lentille. L'écart relatif de longueur des bras est choisi de sorte que l'écart en fréquence (ou en longueur d'onde) correspondant soit inférieur à la largeur de cette bande passante. En d'autres termes, l'écart entre la fréquence de résonance du bras long et de la fréquence de résonance du bras court est choisi inférieur à la largeur à mi-hauteur de la réponse spectrale en transmission desdits bras.

La Fig. 5 représente la variation relative de la distance focale en fonction d'une variation relative de la longueur d'onde incidente, pour un exemple de lentille à métasurface selon l'invention.

On a représenté en abscisses la variation relative de longueur d'onde et en ordonnées la variation relative de distance focale.

Dans la mesure où la distance focale est sensiblement supérieure à la longueur d'onde ($f \gg \lambda$), on vérifie qu'une variation de longueur d'onde n'entraine qu'une faible variation de la distance focale.

On suppose dans la suite que l'onde incidente comprend une première composante spectrale à la longueur d'onde $\lambda_1$ et une seconde composante spectrale à la longueur d'onde $\lambda_2$.

Selon une variante du premier mode de réalisation de l'invention, la lentille à métasurface comprend un premier réseau de résonateurs sub-longueur d'onde à la longueur d'onde $\lambda_1$ et un second réseau de résonateurs sub-longueur d'onde à la longueur d'onde $\lambda_2$. En d'autres termes, les résonateurs élémentaires du premier réseau sont des croix dont les bras sont de longueurs inégales et proches de $\frac{\lambda_1}{2n}$ et les résonateurs élémentaires du second réseau sont des croix dont les bras sont de longueurs inégales et proches de $\frac{\lambda_2}{2n}$.

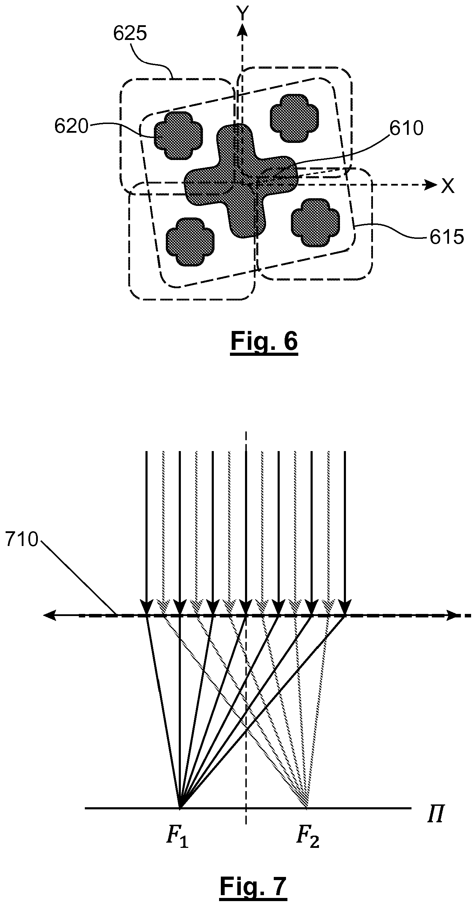

La Fig. 6 représente de manière schématique un agencement de résonateurs sub-longueur d'onde pour une lentille à métasurface selon cette variante.

On a représenté par 611 un résonateur élémentaire du premier réseau et par 621-624 des résonateurs élémentaires du second réseau.

La section efficace d'un résonateur élémentaire étant généralement de l'ordre $\left(\frac{\lambda}{2}\right)^2$ alors que les longueurs de bras sont de l'ordre de $\frac{\lambda}{2n}$, il est possible de réaliser un motif de base composé de résonateurs élémentaires des premier et second réseaux dans lequel la section efficace de chaque résonateur élémentaire du premier réseau est couverte par la section efficace de résonateurs élémentaires du second réseau.

Ainsi, en Fig. 6, la section efficace 615 du résonateur élémentaire 610 est couverte par les sections efficaces 625 des résonateurs élémentaires 620 avoisinants.

On peut alors orienter les résonateurs élémentaires des premier et second réseaux de sorte que la composante à la longueur d'onde $\lambda_1$ converge en un premier point focal $F_1$ et la composante à la longueur d'onde $\lambda_2$ converge en un second point focal $F_2$, distinct de $F_1$. On supposera que les points focaux sont situés à la même distance focale $f$ mais décentrés par rapport à l'axe optique de la lentille. Les coordonnées de $F_1$ et $F_2$ dans le plan $\Pi$ parallèle au plan de la lentille sont respectivement de coordonnées $(x_1, y_1)$ et $(x_2, y_2)$.

L'orientation d'un résonateur élémentaire du premier réseau dont le centre de phase est situé en un point $P_i$ de coordonnées $(x_i, y_i)$ dans un repère $(O, x, y)$ du plan de la lentille est choisie de manière à introduire un déphasage

$$\varphi_{1,i} = \frac{2\pi n_o^1}{\lambda_1}\left(f - \sqrt{(x_i - x_1)^2 + (y_i - y_1)^2 + f^2}\right)$$ avec $\left|\varphi_{1,i}\right| < \dfrac{\pi}{2}$ où $n_o^1$ est l'indice optique du milieu de sortie à la longueur d'onde $\lambda_1$.

De même, l'orientation d'un résonateur élémentaire du second réseau dont le centre est situé en un point $P_j$ de coordonnées $(x_j, y_j)$ dans le repère $(O, x, y)$ est choisie de manière à introduire un déphasage

$$\varphi_{2,j} = \frac{2\pi n_o^2}{\lambda_2}\left(f - \sqrt{(x_j - x_2)^2 + (y_j - y_2)^2 + f^2}\right)$$ avec $\left|\varphi_{2,j}\right| < \dfrac{\pi}{2}$ où $n_o^2$ est l'indice optique du milieu de sortie à la longueur d'onde $\lambda_2$.

La Fig. 7 représente de manière schématique l'utilisation d'une lentille à métasurface pour effectuer un tri spectral en lumière polarisée.

La lentille à métasurface, désignée par 710, est structurée pour comporter deux réseaux de résonateurs élémentaires comme décrit en relation avec la Fig. 6. Les points focaux sont désignés par $F_1$ et $F_2$. Une onde incidente arrivant sur la lentille selon la direction de l'axe optique est focalisée au point $F_1$ pour ce qui est de sa composante à la longueur d'onde $\lambda_1$ et au point $F_2$ pour ce qui est de sa composante à la longueur d'onde $\lambda_2$.

Il est ainsi possible de trier les deux composantes spectrales de l'onde incidente aux points $F_1$ et $F_2$. L'homme du métier comprendra que ce tri spectral peut être généralisé sans difficulté à plus de 2 longueurs d'onde en structurant la lentille à métasurface en autant de réseaux de résonateurs que de longueurs d'onde à trier

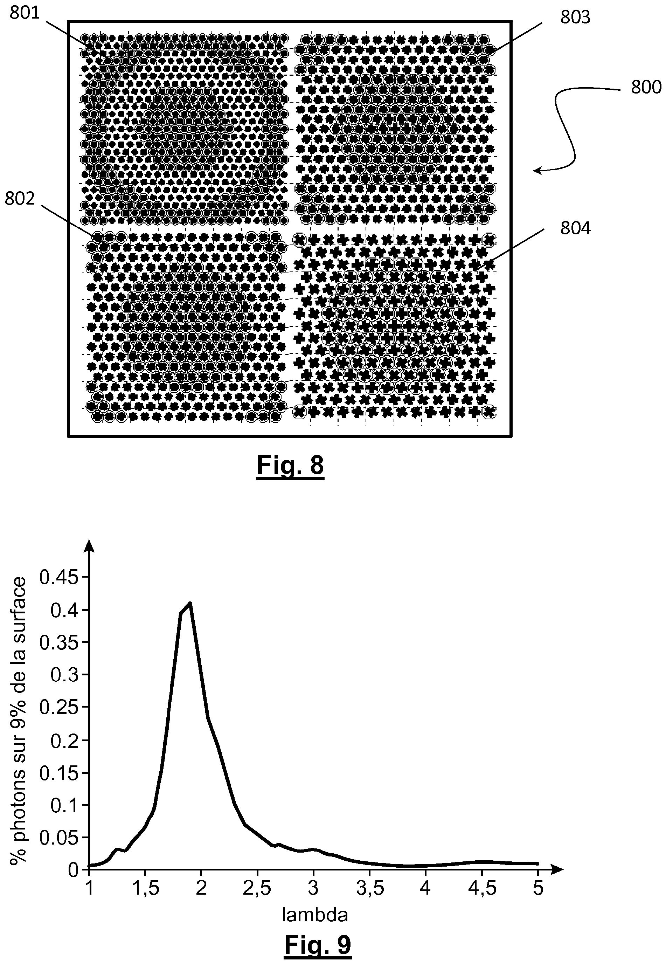

La Fig. 8 représente de manière schématique l'utilisation de lentilles à métasurface pour effectuer une imagerie quadrichromique.

Plus précisément, on a représenté dans cette figure un pixel 800, divisé en quatre sous-pixels élémentaires, chaque sous-pixel élémentaire 801-804 étant associé à une lentille à métasurface dont les résonateurs sont centrés sur une longueur d'onde particulière.

Dans le cas présent, les lentilles associées aux sous-pixels élémentaires 801-804 sont respectivement calées sur les longueurs d'onde 2 $\mu$m, 3,3 $\mu$m, 3,7$\mu$m et 4,5 $\mu$m. La taille du pixel est de 30 $\mu$m $\times$ 30 $\mu$m et celle des sous-pixels élémentaires 15 $\mu$m $\times$ 15 $\mu$m. L'indice du milieu de sortie (substrat en CdTe) est de 2,7 et l'indice du matérau comblant les bras des croix est 2,2 (SiN ou ZnS). La distance focale est ici de 30 $\mu$m.

Les lentilles à métasurface associées aux sous-pixels élémentaires 801-804 ont la structure décrite en relation avec les Figs. 3C et 4.

On comprendra que chaque lentille à métasurface associée à un sous-pixel remplit à la fois une fonction de focalisation et de filtrage, l'intensité du faisceau incident étant mesurée aux quatre longueurs d'onde d'intérêt en quatre points focaux situés dans un même plan.

Le fait d'utiliser pour une même lentille des croix de même taille mais d'orientations différentes permet d'obtenir un filtrage avec une meilleure sélectivité spectrale que dans l'état de la technique (cf. article de X.M. Goh précité). En d'autres termes, les réponses des différentes lentilles sont bien séparées en longueur d'onde.

La Fig. 9 représente le pourcentage de photons tombant sur une portion du plan focal en fonction de la longueur d'onde pour la lentille à métasurface de la Fig. 8 associée à la longueur d'onde de 2 $\mu$m.

La portion du plan focal considérée est prise ici égale à 9% de la surface de la lentille en question. On constate que la lentille présente une bonne sélectivité spectrale autour de la longueur d'onde centrale des résonateurs, à savoir 2 $\mu$m. Les longueurs d'onde 3,3 $\mu$m, 3,7$\mu$m et 4,5 $\mu$m correspondant aux autres sous-pixels élémentaires sont bien filtrées.

**Revendications**

1. Lentille à métasurface destinée à recevoir une onde incidente de longueur d'onde donnée, **caractérisée en ce qu'**elle comprend au moins un premier réseau de résonateurs, lesdits résonateurs du premier réseau étant des croix de formes identiques, ledit premier réseau étant situé dans un plan de la lentille, chaque croix comprenant au moins un premier bras (110), dit bras long, s'étendant selon un premier axe et un second bras (120), dit bras court, de longueur strictement inférieure au bras long et s'étendant selon un second axe, sensiblement orthogonal au premier axe, chaque croix déphasant l'onde incidente en introduisant un déphasage propre ($\varphi_i$) dépendant de l'orientation de la croix ($\psi_i$) par rapport à une direction de référence dans le plan de la lentille, les croix du premier réseau ne possédant pas une orientation unique.

2. Lentille à métasurface selon la revendication 1, **caractérisée en ce que** la longueur du bras long est supérieure de 5% à 10% à la longueur du bras court.

3. Lentille à métasurface selon la revendication 1 ou 2, **caractérisée en ce que** les longueurs des bras long et court sont choisies de manière à ce que l'écart entre la fréquence de résonance du bras long et la fréquence de résonance du bras court soit inférieur à la largeur à mi-hauteur de la réponse spectrale en transmission de chacun desdits bras.

4. Lentille à métasurface selon l'une des revendications précédentes, **caractérisée en ce que** les croix sont réalisées par des évidements au sein d'une couche métallique, la couche métallique étant déposée sur une première couche diélectrique transparente à ladite longueur d'onde donnée.

5. Lentille à métasurface selon la revendication 4, **caractérisée en ce que** les évidements sont comblés par un matériau d'indice optique plus élevé que l'indice optique de la première couche diélectrique.

6. Lentille à métasurface selon la revendication 4 ou 5, **caractérisée en ce que** la première couche diélectrique est elle-même déposée sur un substrat semi-conducteur transparent à ladite longueur d'onde donnée, l'indice optique du substrat étant supérieur à l'indice de la première couche diélectrique.

7. Lentille à métasurface selon l'une des revendications 4 à 6, **caractérisée en ce qu'**une seconde couche diélectrique est déposée sur la couche métallique, ladite seconde couche diélectrique étant réalisée dans le même matériau que la première couche diélectrique et étant d'épaisseur $\dfrac{\lambda}{2n}$ où $\lambda$ est ladite longueur d'onde donnée et $n$ est l'indice des première et seconde couches diélectriques.

8. Lentille à métasurface selon l'une des revendications 4 à 7, **caractérisée en ce que** la lentille à métasurface est une lentille convergente, de distance focale $f$ et que l'orientation d'une croix dont le centre est situé en un point $P_i$ de coordonnées ($x_i$, $y_i$) dans un repère ($O$, $x$, $y$) dans le plan de la lentille est choisie de manière à générer un déphasage propre $\varphi_i = \dfrac{2\pi n_o}{\lambda}\left(f - \sqrt{x_i^2 + y_i^2 + f^2}\right)$ avec $|\varphi_i| < \dfrac{\pi}{2}$ où $\lambda$ est ladite longueur d'onde donnée et $n_o$ est l'indice du milieu de sortie de la lentille.

9. Lentille à métasurface selon la revendication 7, **caractérisée en ce que** la lentille à métasurface est une lentille convergente, de distance focale $f$ et que l'orientation d'une croix dont le centre est situé en un point $P_i$ de coordonnées ($x_i$, $y_i$) dans un repère ($O$, $x$, $y$) dans le plan de la lentille est choisie de manière à générer un déphasage propre $\varphi_i = \phi_i \bmod \dfrac{\pi}{2}$ avec $\phi_i = \dfrac{2\pi n_o}{\lambda}\left(f - \sqrt{x_i^2 + y_i^2 + f^2}\right)$, où $n_o$ est l'indice du milieu de sortie de la lentille, une troisième couche diélectrique d'épaisseur $\dfrac{\lambda}{2n}$ étant déposée uniquement au-dessus des croix pour lesquelles $\dfrac{\pi}{2} < |\phi|_i < \pi$.

10. Lentille à métasurface selon l'une quelconque des revendications précédentes, **caractérisée en ce que** l'orientation des croix ne peut prendre qu'un ensemble fini de valeurs angulaires discrètes.

11. Lentille à métasurface selon l'une quelconque des revendications précédentes, **caractérisée en ce que** le premier réseau est périodique.

12. Lentille à métasurface selon l'une des revendications 4 à 8, **caractérisée en ce qu'**elle comprend un second réseau de résonateurs, les résonateurs du second réseau étant des croix de formes identiques, le second réseau étant situé dans le plan de la lentille, chaque croix du second réseau étant en outre située dans une section efficace de

taille $\left(\dfrac{\lambda}{2}\right)^2$ d'une croix du premier réseau, les croix du second réseau étant de taille inférieure à celle des croix du premier réseau, chaque croix du second réseau comportant également un bras long et un bras court, chaque croix du second réseau déphasant l'onde incidente par un déphasage propre dépendant de son orientation, au sein du plan de la lentille, par rapport à ladite direction de référence.

13. Lentille à métasurface selon la revendication 12, **caractérisée en ce que** l'onde incidente comprend une première composante spectrale à une première longueur d'onde $\lambda_1$ et une seconde composante spectrale à une seconde longueur d'onde $\lambda_2$ , que la lentille à métasurface est une lentille convergente, de distance focale $f$ , que l'orientation d'une croix du premier réseau dont le centre est situé en un point $P_i$ de coordonnées $(x_i, y_i)$ dans un repère $(O, x, y)$ du plan de la lentille est choisie de manière à générer un déphasage propre

$$\varphi_{1,i} = \frac{2\pi n_o^1}{\lambda_1}\left( f - \sqrt{\left(x_i - x_1\right)^2 + \left(y_i - y_1\right)^2 + f^2} \right)$$ avec $\left|\varphi_{1,i}\right| < \dfrac{\pi}{2}$ où $n_o^1$ est l'indice optique du milieu de sortie de la lentille, à la longueur d'onde $\lambda_1$, et que l'orientation d'une croix du second réseau dont le centre est situé en un point $P_j$ de coordonnées $(x_j, y_j)$ dans le repère $(O, x, y)$ est choisie de manière à générer un déphasage propre

$$\varphi_{2,j} = \frac{2\pi n_o^2}{\lambda_2}\left( f - \sqrt{\left(x_j - x_2\right)^2 + \left(y_j - y_2\right)^2 + f^2} \right)$$ avec $\left|\varphi_{2,j}\right| < \dfrac{\pi}{2}$ où $n_o^2$ est l'indice optique du milieu de sortie de la lentille, à la longueur d'onde $\lambda_2$ .

## Patentansprüche

1. Linse mit Metaoberfläche zum Empfangen einer einfallenden Welle mit gegebener Wellenlänge, **dadurch gekennzeichnet, dass** sie mindestens ein erstes Array von Resonatoren umfasst, wobei die Resonatoren des ersten Array Kreuze mit identischen Formen sind, wobei das erste Array in einer Ebene der Linse liegt, wobei jedes Kreuz mindestens einen ersten Arm (110), längerer Arm genannt, der sich entlang einer ersten Achse erstreckt, und einen zweiten Arm (120), kürzerer Arm genannt, umfasst, dessen Länge strikt kleiner als die des längeren Arms ist und der sich entlang einer zweiten Achse erstreckt, die im Wesentlichen orthogonal zur ersten Achse verläuft, wobei jedes Kreuz die einfallende Welle phasenverschiebt, indem es eine Eigenphasenverschiebung ($\varphi_i$,) einbringt, die von der Ausrichtung des Kreuzes ($\psi_i$) in Bezug auf eine Bezugsrichtung in der Ebene der Linse abhängt, wobei die Kreuze des ersten Array keine einheitliche Ausrichtung besitzen.

2. Linse mit Metaoberfläche nach Anspruch 1, **dadurch gekennzeichnet, dass** die Länge des längeren Arms um 5% bis 10% größer ist als die Länge des kürzeren Arms.

3. Linse mit Metaoberfläche nach Anspruch 1 oder 2, **dadurch gekennzeichnet, dass** die Längen des längeren und des kürzeren Arms so gewählt sind, dass die Abweichung zwischen der Resonanzfrequenz des längeren Arms und der Resonanzfrequenz des kürzeren Arms kleiner ist als die Halbwertsbreite der spektralen Transmissionsreaktion jedes dieser Arme.

4. Linse mit Metaoberfläche nach einem der vorhergehenden Ansprüche, **dadurch gekennzeichnet, dass** die Kreuze durch Aussparungen innerhalb einer Metallschicht gebildet werden, wobei die Metallschicht auf einer ersten dielektrischen Schicht abgeschieden ist, die bei der gegebenen Wellenlänge transparent ist.

5. Linse mit Metaoberfläche nach Anspruch 4, **dadurch gekennzeichnet, dass** die Aussparungen mit einem Material ausgefüllt sind, dessen optischer Index höher ist als der optische Index der ersten dielektrischen Schicht.

6. Linse mit Metaoberfläche nach Anspruch 4 oder 5, **dadurch gekennzeichnet, dass** die erste dielektrische Schicht ihrerseits auf einem Halbleitersubstrat abgeschieden ist, das bei der genannten gegebenen Wellenlänge transparent ist, wobei der optische Index des Substrats höher ist als der Index der ersten dielektrischen Schicht.

**7.** Linse mit Metaoberfläche nach einem der Ansprüche 4 bis 6, **dadurch gekennzeichnet, dass** eine zweite dielektrische Schicht auf der Metallschicht abgeschieden ist, wobei die zweite dielektrische Schicht aus dem gleichen Material wie die erste dielektrische Schicht hergestellt ist und die Dicke $\frac{\lambda}{2n}$ hat, worin $\lambda$ die genannte gegebene Wellenlänge ist und n der Index der ersten und der zweiten dielektrischen Schicht ist.

**8.** Linse mit Metaoberfläche nach einem der Ansprüche 4 bis 7, **dadurch gekennzeichnet, dass** die Linse mit Metaoberfläche eine Sammellinse mit der Brennweite $f$ ist und dass die Ausrichtung eines Kreuzes, dessen Mittelpunkt in einem Punkt $p_i$ mit den Koordinaten $(x_i, y_i)$ in einem Koordinatensystem $(O,x,y)$ in der Ebene der Linse liegt, so

$$\varphi_i = \frac{2\pi n_o}{\lambda}\left(f - \sqrt{x_i^2 + y_i^2 + f^2}\right) \quad \text{mit } |\varphi_i| < \frac{\pi}{2}$$

gewählt ist, dass eine Eigenphasenverschiebung erzeugt wird, worin $\lambda$ die genannte gegebene Wellenlänge ist und $n_o$ der Index des Austrittsmediums der Linse ist.

**9.** Linse mit Metaoberfläche nach Anspruch 7, **dadurch gekennzeichnet, dass** die Linse mit Metaoberfläche eine Sammellinse mit der Brennweite $f$ ist und dass die Ausrichtung eines Kreuzes, dessen Mittelpunkt in einem Punkt $p_i$ mit den Koordinaten $(x_i, y_i)$ in einem Koordinatensystem $(O,x,y)$ in der Ebene der Linse liegt, so gewählt ist, dass

eine Eigenphasenverschiebung $\varphi_i = \phi_i \bmod \frac{\pi}{2}$ mit $\varphi_i = \frac{2\pi n_o}{\lambda}\left(f - \sqrt{x_i^2 + y_i^2 + f^2}\right)$ erzeugt wird, worin

$n_o$ der Index des Austrittsmediums der Linse ist, wobei eine dritte dielektrische Schicht mit der Dicke $\frac{\lambda}{2n}$ nur über denjenigen Kreuzen abgeschieden wird, für die gilt: $\frac{\pi}{2} < |\phi|_i < \pi$ .

**10.** Linse mit Metaoberfläche nach einem der vorhergehenden Ansprüche, **dadurch gekennzeichnet, dass** die Ausrichtung der Kreuze nur eine endliche Menge diskreter Winkelwerte annehmen kann.

**11.** Linse mit Metaoberfläche nach einem der vorhergehenden Ansprüche, **dadurch gekennzeichnet, dass** das erste Array periodisch ist.

**12.** Linse mit Metaoberfläche nach einem der Ansprüche 4 bis 8, **dadurch gekennzeichnet, dass** sie ein zweites Array von Resonatoren umfasst, wobei die Resonatoren des zweiten Array Kreuze mit identischen Formen sind, wobei das zweite Array in der Ebene der Linse liegt, wobei jedes Kreuz des zweiten Array ferner in einem effektiven Querschnitt der Größe $\left(\frac{\lambda}{2}\right)^2$ eines Kreuzes des ersten Array liegt, wobei die Kreuze des zweiten Array kleiner sind als die Kreuze des ersten Array, wobei jedes Kreuz des zweiten Array auch einen längeren Arm und einen kürzeren Arm umfasst, wobei jedes Kreuz des zweiten Array die einfallende Welle durch eine Eigenphasenverschiebung phasenverschiebt, die von seiner Ausrichtung innerhalb der Ebene der Linse in Bezug auf die Bezugsrichtung abhängt.

**13.** Linse mit Metaoberfläche nach Anspruch 12, **dadurch gekennzeichnet, dass** die einfallende Welle eine erste Spektralkomponente bei einer ersten Wellenlänge $\lambda_1$ und eine zweite Spektralkomponente bei einer zweiten Wellenlänge $\lambda_2$ umfasst, dass die Linse mit Metaoberfläche eine Sammellinse mit der Brennweite $f$ ist, dass die Ausrichtung eines Kreuzes des ersten Array, dessen Mittelpunkt in einem Punkt $p_i$ mit den Koordinaten $(x_i, y_i)$ in einem Koordinatensystem $(O,x,y)$ in der Ebene der Linse liegt, so gewählt ist, dass eine Eigenphasenverschiebung

$$\varphi_{1,i} = \frac{2\pi n_o^1}{\lambda_1}\left(f - \sqrt{(x_i - x_1)^2 + (y_i - y_1)^2 + f^2}\right) \quad \text{mit } |\varphi_{1,i}| < \frac{\pi}{2}$$

erzeugt wird, worin $n_o^1$ der optische Index des Austrittsmediums der Linse bei der Wellenlänge $\lambda_1$ ist, und dass die Ausrichtung eines Kreuzes des zweiten Array, dessen Mittelpunkt in einem Punkt $P_j$ mit den Koordinaten $(x_j, y_j)$ in einem Koordinatensystem $(O,x,y)$ liegt, so gewählt ist, dass eine Eigenphasenverschiebung

$$\varphi_{2,j} = \frac{2\pi n_o^2}{\lambda_2}\left(f - \sqrt{(x_j - x_2)^2 + (y_j - y_2)^2 + f^2}\right)$$ mit $\left|\varphi_{2,j}\right| < \frac{\pi}{2}$ erzeugt wird, worin $n_o^2$ der optische Index des Austrittsmediums der Linse bei der Wellenlänge $\lambda_2$ ist.

**Claims**

1. Lens with a metasurface intended to receive an incident wave of a given wavelength, **characterised in that** it comprises at least one first array of resonators, said resonators of the first array being crosses having identical shapes, said first array being located in a plane of the lens, each cross comprising at least one first arm (110), called long arm, extending along a first axis and a second arm (120), called short arm, having a length strictly less than the long arm and extending along a second axis, substantially orthogonal to the first axis, each cross phase shifting the incident wave by introducing a specific phase shift ($\varphi_i$) depending on the orientation of the cross ($\psi_i$) with respect to a reference direction in the plane of the lens, the crosses of the first array not having one single orientation.

2. Lens with a metasurface according to claim 1, **characterised in that** the length of the long arm is greater than the length of the short arm by 5% to 10%.

3. Lens with a metasurface according to claim 1 or 2, **characterised in that** the lengths of the long and short arm are chosen in such a way that the difference between the resonance frequency of the long arm and the resonance frequency of the short arm is less than the width at half height of the transmission spectral response of each of said arms.

4. Lens with a metasurface according to one of the previous claims, **characterised in that** the crosses are made by apertures in a metal layer, the metal layer being deposited on a first dielectric layer transparent to said given wavelength.

5. Lens with a metasurface according to claim 4, **characterised in that** the apertures are filled by a material having an optical index greater than the optical index of the first dielectric layer.

6. Lens with a metasurface according to claim 4 or 5, **characterised in that** the first dielectric layer is itself deposited on a semiconductor substrate transparent to said given wavelength, the optical index of the substrate being greater than the index of the first dielectric layer.

7. Lens with a metasurface according to one of claims 4 to 6, **characterised in that** a second dielectric layer is deposited on the metal layer, said second dielectric layer being made from the same material as the first dielectric layer and having a thickness of $\frac{\lambda}{2n}$ where $\lambda$ is said given wavelength and $n$ is the index of the first and second dielectric $2n$ layer.

8. Lens with a metasurface according to one of claims 4 to 7, **characterised in that** the lens with a metasurface is a convergent lens, having a focal distance $f$, and the orientation of a cross, the centre of which is located at a point $P_i$ having the coordinates ($x_i$, $y_i$) in a reference frame ($O, x, y$) in the plane of the lens, is chosen in such a way as to generate a specific phase shift $\varphi_i = \frac{2\pi n_o}{\lambda}\left(f - \sqrt{x_i^2 + y_i^2 + f^2}\right)$ with $\left|\varphi_i\right| < \frac{\pi}{2}$ where $\lambda$ is said given wavelength and $n_o$ is the index of the output medium of the lens.

9. Lens with a metasurface according to claim 7, **characterised in that** the lens with a metasurface is a convergent lens, having a focal distance $f$, and the orientation of a cross, the centre of which is located at a point $P_i$ having the coordinates ($x_i$, $y_i$) in a reference frame ($O, x, y$) in the plane of the lens, is chosen in such a way as to generate a specific phase shift $\varphi_i = \phi_i \bmod \frac{\pi}{2}$ with $\phi_i = \frac{2\pi n_o}{\lambda}\left(f - \sqrt{x_i^2 + y_i^2 + f^2}\right)$, where $n_o$ is the index of the output medium of the lens, a third dielectric layer having a thickness of $\dfrac{\lambda}{2n}$ being deposited only above the crosses for which $\dfrac{\pi}{2} < |\phi|_i < \pi$ .

10. Lens with a metasurface according to any one of the previous claims, **characterised in that** the orientation of the crosses can only take on a finite set of discrete angular values.

11. Lens with a metasurface according to any one of the previous claims, **characterised in that** the first array is periodic.

12. Lens with a metasurface according to one of claims 4 to 8, **characterised in that** it comprises a second array of resonators, the resonators of the second array being crosses having identical shapes, the second array being located in the plane of the lens, each cross of the second array being further located in an effective cross-section having a size of $\left(\dfrac{\lambda}{2}\right)^2$ of a cross of the first array, the crosses of the second array having a size smaller than that of the crosses of the first array, each cross of the second array also comprising a long arm and a short arm, each cross of the second array phase shifting the incident wave by a specific phase shift depending on its orientation, in the plane of the lens, with respect to said reference direction.

13. Lens with a metasurface according to claim 12, **characterised in that** the incident wave comprises a first spectral component at a first wavelength $\lambda_1$ and a second spectral component at a second wavelength $\lambda_2$, the lens with a metasurface is a convergent lens, having a focal distance $f$, the orientation of a cross of the first array, the centre of which is located at a point $P_i$ having the coordinates $(x_i, y_i)$ in a reference frame $(O, x, y)$ of the plane of the lens, is chosen in such a way as to generate a specific phase shift

$$\varphi_{1,i} = \frac{2\pi n_o^1}{\lambda_1}\left(f - \sqrt{(x_i - x_1)^2 + (y_i - y_1)^2 + f^2}\right)$$

with $|\varphi_{1,i}| < \dfrac{\pi}{2}$ where $n_o^1$ is the optical index of the output medium of the lens, at the wavelength $\lambda_1$, and the orientation of a cross of the second array, the centre of which is located at a point $P_j$ having the coordinates $(x_j, y_j)$ in the reference frame $(O, x, y)$, is chosen in such a way as to generate a specific phase shift

$$\varphi_{2,j} = \frac{2\pi n_o^2}{\lambda_2}\left(f - \sqrt{(x_j - x_2)^2 + (y_j - y_2)^2 + f^2}\right)$$ with $|\varphi_{2,j}| < \dfrac{\pi}{2}$ , where $n_o^2$ is the optical index of the output medium of the lens, at the wavelength $\lambda_2$ .

120

110

ψ

**Fig. 1**

240
230
220

**Fig. 2A**

210

250
240
230
220

**Fig. 2B**

210

**Fig. 3A**

**Fig. 3B**

**Fig. 3C**

**Fig. 4**

**Fig. 5**

**Fig. 6**

**Fig. 7**

**Fig. 8**

**Fig. 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **N. YU et al.** Flat optics with designer metasurfaces. *Nature Materials,* 13 Février 2014, 139-150

- **X. M. GOH et al.** Plasmonic lenses for wavefront control applications using two-dimensional nanometric cross-shaped aperture arrays. *J. Opt. Soc. Am. B,* Mars 2011, vol. 28 (3), 547-553